# EUROPÄISCHE PATENTSCHRIFT

(11) **EP 3 339 106 B1**
(45) Veröffentlichungstag und Bekanntmachung des Hinweises auf die Patenterteilung: **22.07.2020**
(21) Anmeldenummer: 17202942.3
(22) Anmeldetag: 22.11.2017
(51) Int. Cl.: B60R 19/56

(54) **HECKUNTERFAHRSCHUTZ FÜR EIN FAHRZEUG**
REAR UNDERRIDE GUARD FOR A VEHICLE
PROTECTION CONTRE L'ENCASTREMENT À L'ARRIÈRE POUR UN VÉHICULE

(30) Priorität: 23.12.2016 DE 102016015495
(43) Veröffentlichungstag der Anmeldung: 27.06.2018
(73) Patentinhaber: MAN Truck & Bus SE, 80995 München (DE)
(72) Erfinder: Wilke, Florian, 81549 München (DE); Bogicevic, Aleksandar, 81247 München (DE); Langhammer, Mike, 80992 München (DE); Marx, Stefan, 82290 Landsberied (DE)
(74) Vertreter: v. Bezold & Partner Patentanwälte - PartG mbB

(56) Entgegenhaltungen:
- EP-A1- 1 972 506
- DE-A1- 2 349 315
- DE-A1- 3 827 923
- DE-A1- 10 330 726
- JP-A- 2006 088 905

## Beschreibung

Die Erfindung betrifft einen Unterfahrschutz zur Anordnung an ein Heck eines Fahrzeugs, vorzugsweise Kraftfahrzeugs, z. B. eines Nutzfahrzeugs, insbesondere eines Lastkraftwagens oder eines Omnibusses, und/oder eines Anhängers hierfür.

Die DE 23 49 315 A1 offenbart einen am hinteren Ende unter der Plattform von Kraftfahrzeugen oder Anhängern angeordneten Unterfahrschutz aus einem waagerecht und quer zur Längsachse des Fahrzeuges angeordneten, am Fahrzeug befestigten Balken, wobei der Balken aus elastisch nachgiebigem Material besteht und an seinen Enden am Fahrzeug befestigt ist. Zum Stand der Technik kann ferner auf die DE 103 30 726 A1 und die EP 1 972 506 A1 verwiesen werden

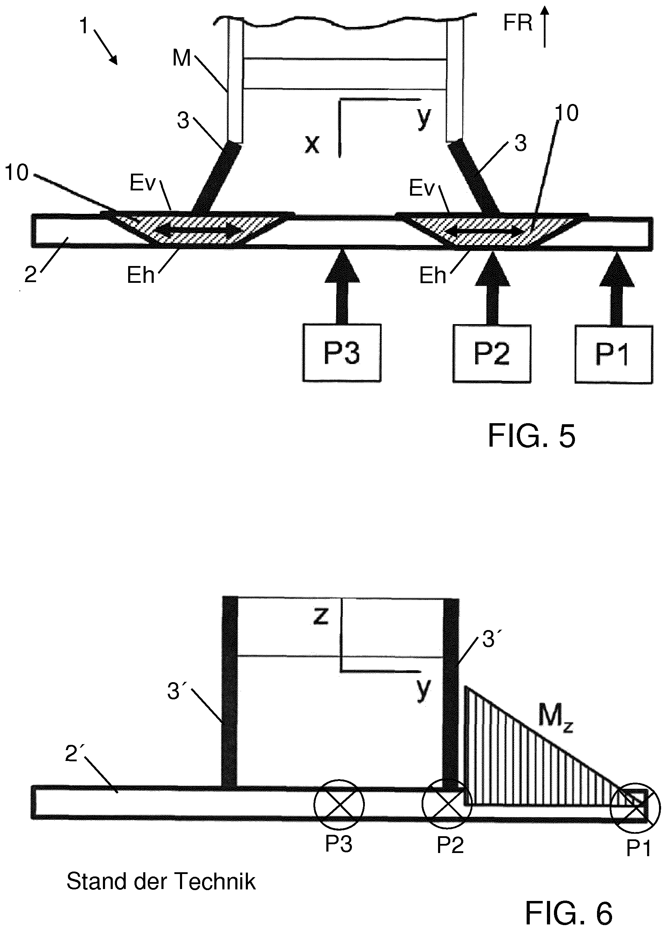

Im Stand der Technik sind des Weiteren Unterfahrschutzsysteme für das Heck von Nutzfahrzeugen in unterschiedlichster Ausführungsform bekannt. Heck-Unterfahrschutzsysteme sollen im Allgemeinen verhindern, dass bei einem Verkehrsunfall kleinere Fahrzeuge (z. B. Personenkraftwagen, Zweiräder etc.) das Nutzfahrzeug von hinten unterfahren, wodurch für die Personen der kleineren Fahrzeuge eine große Gefahr besteht, verletzt oder sogar getötet zu werden. Heck-Unterfahrschutzsysteme müssen gesetzlichen Anforderungen genügen (z. B. ECE R58). Die Figur 6 zeigt eine Ansicht von hinten eines aus der Praxis bekannten Heck-Unterfahrschutzes, mit einem Biegemomentenverlauf Mz, der aus einer horizontalen Belastung von hinten (z. B. Aufprall eines anderen Kraftfahrzeugs) am Prüfpunkt P1 resultiert. Der Heck-Unterfahrschutz umfasst einen Querträger 2'und zwei Tragarme 3' zum Tragen des Querträgers 2' und zur Montage an das Nutzfahrzeug. Nachteilig daran ist insbesondere die hohe Biegemomentenbelastung Mz am Übergang zwischen Querträger 2' und Tragarm 3'.

Eine Aufgabe der Erfindung ist es, eine gleichmäßigere und/oder verbesserte Auslastung eines Unterfahrschutz-Querträgers zu schaffen, insbesondere hinsichtlich gesetzlich geforderter Prüfkräfte an gesetzlich geforderten Prüfpunkten (z. B. ECE R58).

Diese Aufgabe kann mit den Merkmalen des Anspruchs 1 gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft einen Unterfahrschutz zur Anordnung an ein Heck eines Fahrzeugs, vorzugsweise Kraftfahrzeugs, z. B. eines Nutzfahrzeugs, wie etwa einen Lastkraftwagen oder einen Omnibus, und/oder eines Anhängers hierfür. Der Unterfahrschutz umfasst einen Querträger und zwei Tragarme zum Tragen des Querträgers und zur Montage an einer Montagekonstruktion des Fahrzeugs. Die Montagekonstruktion kann zweckmäßig ein Fahrzeugrahmen sein, insbesondere eine Längsträger- und/oder Querträgerkonstruktion.

Der Unterfahrschutz zeichnet sich dadurch aus, dass die zwei Tragarme nach seitlich außen und somit in Längsrichtung des Querträgers seitlich ausgestellt sind, so dass der Abstand der Tragarme am Querträger größer ist als der Abstand der Tragarme an der Montagekonstruktion.

x kennzeichnet zweckmäßig die Längsrichtung-/achse des Fahrzeugs. y kennzeichnet zweckmäßig die Breitenrichtung-/achse des Fahrzeugs. z kennzeichnet zweckmäßig die Höhenrichtung-/achse des Fahrzeugs.

Das Ausstellen der Tragarme erfolgt somit zweckmäßig in einem Winkel zur xz-Ebene.

Durch das Ausstellen der Tragarme nach seitlich außen und optional die weiter unten erörterten Verbindungseinrichtungen kann ein reduziertes Biegemoment Mz um die z-Achse im Übergangsbereich zwischen Querträger und Tragarm erzielt werden, insbesondere infolge einer Prüfkraft am Prüfpunkt P1 gemäß ECE R58.

Dadurch kann eine gleichmäßige und/oder verbesserte Auslastung des Querträgers ermöglicht werden, insbesondere hinsichtlich gesetzlich geforderter Prüfkräfte an gesetzlich geforderten Prüfpunkten (z. B. P1 und P3 nach ECE R58).

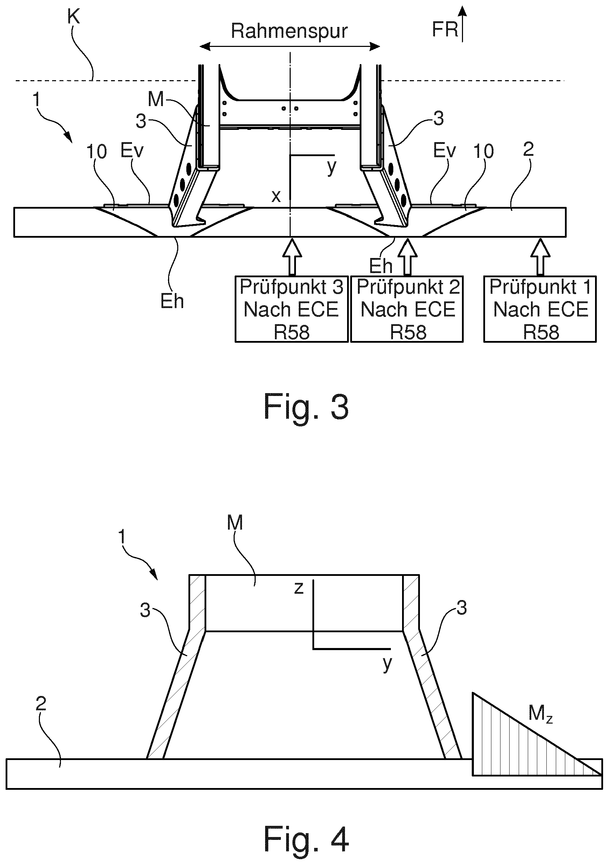

Im Allgemeinen ergibt sich durch das Ausstellen der Tragarme nach seitlich außen insbesondere eine erhöhte Belastbarkeit des Unterfahrschutzes am Prüfpunkt P1 und eine verringerte Belastbarkeit am Prüfpunkt P3 (siehe z. B. Figuren 3 und 5).

Es ist möglich, dass die Tragarme relativ zum Fahrzeug nach hinten ausgestellt sind. Ebenfalls ist es möglich, dass sich die Tragarme sich von der Montagekonstruktion nach unten erstrecken.

Die Tragarme erstrecken sich zwischen dem Querträger und der Montageeinrichtung vorzugsweise schräg.

Eine weitere Besonderheit des Unterfahrschutzes ist, dass er zwei Verbindungseinrichtungen zur Montage des Querträgers an die Tragarme umfasst.

Die Verbindungseinrichtungen dienen als Verstärkungsteile zur abschnittsweisen mechanischen Verstärkung des Querträgers, insbesondere durch Vergrößerung, z. B. zumindest Doppelung, der Materialdicke im Übergangsbereich zwischen dem Querträger und den Tragarmen.

Alternativ oder ergänzend dienen die Verbindungseinrichtungen zur Verstellbarkeit der Tragarme entlang des Querträgers.

Die jeweilige Verbindungseinrichtung weist eine Vorderseite und eine Hinterseite auf und eine Längserstreckung und vorzugweise eine Materialstärke der Hinterseite ist kleiner als eine Längserstreckung und vorzugsweise eine Materialstärke der Vorderseite. Es ist möglich, dass die jeweilige Verbindungseinrichtung sich nach hinten verjüngt und/oder an ihrer Hinterseite schmaler ist als an ihrer Vorderseite (z. B. in Bezug auf ihre Wanddicke und/oder Längserstreckung). Dadurch kann zweckmäßig eine belastungsgerechte oder belastungsangepasste Form oder Kontur der Verbindungseinrichtungen erzeugt werden. Die Belastung entspricht üblicherweise einem im Wesentlichen horizontalen Aufprall von hinten.

Die Verkleinerung, Verjüngung und/oder Verschmälerung kann insbesondere durch eine Materialreduzierung und/oder Materialaussparung der Verbindungseinrichtungen erzielt werden. Sie kann z. B. stufenweise oder kontinuierlich erfolgen.

Die Innenform der Verbindungseinrichtungen ist vorzugsweise an die Außenform des Querträgers angepasst, so dass ein Aufnahmeraum zur abschnittsweisen Aufnahme des Querträgers durch die Verbindungseinrichtungen gebildet werden kann.

Die jeweilige Verbindungseinrichtung kann den Querträger in Umfangsrichtung des Querträgers vorzugsweise über zumindest 180° oder sogar im Wesentlichen vollständig einmanteln. Die jeweilige Verbindungseinrichtung kann z. B. eines von Folgendem umfassen: ein Hohlprofil, insbesondere ein Rund- oder Rechteckhohlprofil, zwei Schalenteile und/oder ein im Wesentlichen C- oder U-Profil.

Die Verbindungseinrichtungen dienen ferner zur vorzugsweise lösbaren Montage an den Querträger.

Die jeweilige Verbindungseinrichtung kann einstückig oder mehrstückig ausgeführt sein.

Zu erwähnen ist noch, dass die Verbindungseinrichtungen z. B. unlösbar (z. B. mittels einer Schweißverbindung) oder lösbar (z. B. mittels einer Schraubverbindung) an die Tragarme montiert sein können.

Die Erfindung ist nicht auf einen Unterfahrschutz beschränkt, sondern umfasst auch ein Fahrzeug, insbesondere ein Nutzfahrzeug, wie etwa einen Lastkraftwagen oder einen Omnibus, und/oder einen Anhänger hierfür, mit einem Unterfahrschutz wie hierin offenbart.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Darstellung eines Unterfahrschutzes gemäß einer Ausführungsform der Erfindung von hinten,
- Figur 2: zeigt eine Darstellung des Unterfahrschutzes der Figur 1 von der Seite,
- Figur 3: zeigt eine Darstellung des Unterfahrschutzes der Figuren 1 und 2 von oben,
- Figur 4: zeigt eine schematische Darstellung eines Biegemomentenverlaufs Mz an einem Unterfahrschutz gemäß einer Ausführungsform der Erfindung,
- Figur 5: zeigt eine schematische Darstellung eines Unterfahrschutzes gemäß einer anderen Ausführungsform der Erfindung von oben, und
- Figur 6: zeigt einen Biegemomentenverlauf Mz an einem Unterfahrschutz gemäß Stand der Technik.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

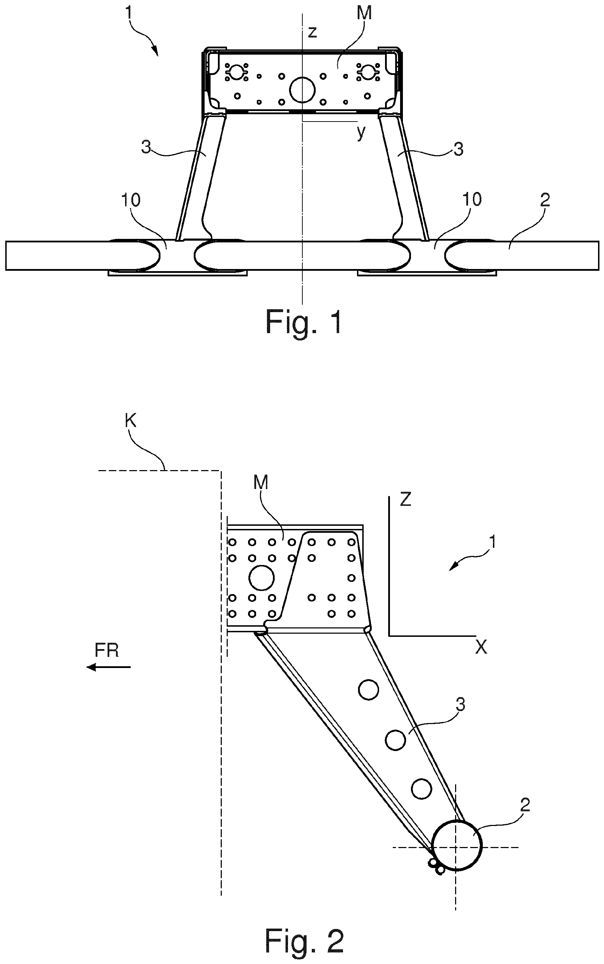

Figur 1 zeigt eine Ansicht von hinten eines Unterfahrschutzes 1 gemäß einer Ausführungsform der Erfindung. Der Unterfahrschutz 1 dient zur Anordnung an ein Heck eines in den Figuren 2 und 3 stark schematisch dargestellten Fahrzeugs K, z. B. eines Kraftfahrzeugs K, insbesondere eines Lastkraftwagens oder Omnibusses.

Der Unterfahrschutz 1 wird nachfolgend unter gemeinsamer Bezugnahme auf die Figuren 1 bis 3 beschrieben, wobei Figur 2 ein Seitenansicht und Figur 3 eine Ansicht von oben des Unterfahrschutzes 1 zeigt. Die Buchstaben x, y, z symbolisieren wie üblich ein Koordinatensystem, wobei x die Längsrichtung-/achse des Kraftfahrzeugs K kennzeichnet, y die Breitenrichtung-/achse des Kraftfahrzeugs K und somit die Längsrichtung-/achse des Querträgers 2 kennzeichnet, und z die Höhenrichtung-/achse des Kraftfahrzeugs K kennzeichnet. Pfeil FR kennzeichnet die Vorwärtsfahrtrichtung des Kraftfahrzeugs K.

Der Unterfahrschutz 1 soll insbesondere verhindern, dass bei einem Verkehrsunfall kleinere Fahrzeuge (z. B. Personenkraftwagen, Zweiräder etc.) das Kraftfahrzeug K von hinten unterfahren, wodurch für die Personen der kleineren Fahrzeuge eine große Gefahr besteht, schwer verletzt oder sogar getötet zu werden. Der Unterfahrschutz 1 soll insbesondere gesetzlichen Anforderungen genügen, z. B. in Bezug auf ECE R58.

Der Unterfahrschutz 1 umfasst einen Querträger 2 und zwei Tragarme 3. Die zwei Tragarme 3 dienen zum Tragen des Querträgers 2 und zur Montage an einer Montagekonstruktion M des Kraftfahrzeugs K. Die Montagekonstruktion M ist vorzugsweise ein Fahrzeugrahmen, z. B. eine Längsträger- oder Querträgerkonstruktion.

Eine Besonderheit ist, dass die zwei Tragarme 3 nach seitlich außen (zweckmäßig in einem Winkel zur xz-Ebene und/oder in y-Richtung) ausgestellt sind, insbesondere so, dass der Abstand der Tragarme 3 unten am Querträger 2 größer ist als der Abstand der Tragarme 3 oben an der Montagekonstruktion M.

Die Tragarme 3 sind nicht nur nach seitlich außen ausgestellt, sondern auch nach hinten (zweckmäßig in einem Winkel zur yz-Ebene und/oder in x-Richtung).

Die Tragarme 3 erstrecken sich zwischen der Montageeinrichtung M und dem Querträger 2 vorzugsweise im Wesentlichen linear-schräg.

Der Unterfahrschutz 1 umfasst darüber hinaus optional zwei Verbindungseinrichtungen 10. Die Verbindungseinrichtungen 10 dienen zur zweckmäßig lösbaren Montage des Querträgers 2 an die Tragarme 3. Die Verbindungseinrichtungen 10 sind als Verstärkungsteile zur abschnittsweisen mechanischen Verstärkung des Querträgers 2 ausgeführt und alternativ oder ergänzend zur Verstellbarkeit in Längsrichtung des Querträgers 2. Die Verbindungseinrichtungen 10 ermöglichen somit eine Verstellung der Tragarme 3 entlang der y-Achse und somit in Längsrichtung des Querträgers 2, so dass der Unterfahrschutz 1 bei Kraftfahrzeugen K mit unterschiedlichen Rahmenspuren verwendet werden kann. Alternativ oder ergänzend können dadurch Rahmenspurtoleranzen und/oder zusätzliche Befestigungselemente für Anbauten (z. B. Aufbauten, Kranplatten etc.) ausgeglichen werden.

Die Verbindungseinrichtungen 10 sind geometrisch so ausgeformt, dass der Querträger 2 gezielt verstärkt ist, vor allem in den für gesetzlich geforderten Prüfkräften relevanten Bereichen / Prüfpunkten (z. B. ECE R58).

Die jeweilige Verbindungseinrichtung 10 umfasst eine Vorderseite Ev und eine Hinterseite Eh, wobei eine Längserstreckung (oder ergänzend eine Materialstärke) der Hinterseite Eh kleiner ist als eine Längserstreckung (oder ergänzend eine Materialstärke) der Vorderseite Ev. Die jeweilige Verbindungseinrichtung 10 verjüngt sich insbesondere nach hinten und ist an ihrer Hinterseite Eh schmaler als an ihrer Vorderseite Ev. Im gezeigten Ausführungsbeispiel erfolgt die Verjüngung und/oder Verschmälerung in Bezug auf die Längserstreckung der Verbindungseinrichtung 10, wobei ebenfalls eine Verjüngung und/oder Verschmälerung in Bezug auf die Wanddicke der Verbindungseinrichtungen 10 erfolgen kann. Die Verbindungseinrichtungen 10 können somit eine Aufprall-belastungsangepasste Form oder Kontur aufweisen. Der Aufprall erfolgt üblicherweise im Wesentlichen horizontal von hinten.

Die Innenform der Verbindungseinrichtungen 10 ist an die Außenform des Querträgers 2 angepasst, so dass dadurch ein Aufnahmeraum zur abschnittsweisen Aufnahme des Querträgers 2 gebildet wird. Im gezeigten Ausführungsbeispiel ist die jeweilige Verbindungseinrichtung 10 als ein belastungsangepasstes Rund-Hohlprofil ausgeführt, wobei auch zwei belastungsangepasste Schalenteile, C-Profile, U-Profile etc. zum Einsatz kommen können. Im gezeigten Ausführungsbeispiel mantelt die jeweilige Verbindungseinrichtung 10 den Querträger 2 in seiner Umfangsrichtung über im Wesentlichen den gesamten Außenumfang ein.

In Figur 3 sind zudem Prüfpunkte P1, P2 und P3 nach ECE R58 gezeigt.

Figur 4 zeigt einen Biegemomentenverlauf Mz an einem Unterfahrschutz 1 in Folge einer Prüfkraft am Prüfpunkt P1, der im Wesentlichen dem in den Figuren 1 bis 3 gezeigten Unterfahrschutz 1 entspricht, allerdings ohne die optionalen Verbindungseinrichtungen 10, die zu einer weiteren Optimierung des Biegemomentenverlaufs Mz führen.

Durch das Ausstellen der Tragarme 3 nach seitlich außen und/oder die verstärkenden Verbindungseinrichtungen 10 kann ein reduziertes Biegemoment Mz um die z-Achse im Übergangsbereich zwischen Querträger 2 und Tragarm 3 erzielt werden, insbesondere infolge einer Prüfkraft am Prüfpunkt P1 gemäß ECE R58.

Dadurch kann eine gleichmäßige, verbesserte Auslastung des Querträgers 2 ermöglicht werden, insbesondere hinsichtlich gesetzlich geforderter Prüfkräfte an gesetzlich geforderten Prüfpunkten P1 und P3 nach ECE R58.

Durch das Ausstellen der Tragarme 3 nach seitlich außen und/oder die verstärkenden Verbindungseinrichtungen 10 ergibt sich insbesondere eine erhöhte Belastbarkeit des Unterfahrschutzes 1 gegenüber einer Prüfkraft am Prüfpunkt P1 und eine verringerte Belastbarkeit am Prüfpunkt P3.

Figur 5 zeigt eine schematische Darstellung eines Unterfahrschutzes 1 gemäß einer Ausführungsform der Erfindung, wobei der Unterfahrschutz 1 im Wesentlichen dem Unterfahrschutz 1 der Figuren 1 bis 3 entspricht. Die Doppelpfeile kennzeichnen die Verstellbarkeit der Verbindungseinrichtungen 10 und somit der Tragarme entlang des Querträgers 2.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Unterfahrschutz
- 2: Querträger
- 3: Tragarme
- 10: Verbindungseinrichtungen
- M: Montageeinrichtung
- P1: Prüfpunkt
- P2: Prüfpunkt
- P3: Prüfpunkt
- Eh: Hinterseite
- Ev: Vorderseite
- x: x-Achse/Richtung
- y: y-Achse/Richtung
- z: z-Achse/Richtung
- K: Fahrzeug, vorzugsweise Kraftfahrzeug und/oder Anhänger hierfür
- FR: Vorwärtsfahrtrichtung des Fahrzeugs

## Patentansprüche

1. Unterfahrschutz (1) zur Anordnung an ein Heck eines Fahrzeugs (K), mit einem Querträger (2) und zwei Tragarmen (3) zum Tragen des Querträgers (2) und zur Montage an einer Montagekonstruktion (M) des Fahrzeugs (K), wobei die zwei Tragarme (3) nach seitlich außen ausgestellt sind, so dass der Abstand der Tragarme (3) am Querträger (2) größer ist als der Abstand der Tragarme (3) an der Montagekonstruktion (M), wobei der Unterfahrschutz (1) zwei Verbindungseinrichtungen (10) zur Montage des Querträgers (2) an die Tragarme (3) umfasst, **dadurch gekennzeichnet, dass** die Verbindungseinrichtungen (10) als Verstärkungsteile zur abschnittsweisen Verstärkung des Querträgers (2) dienen und/oder die Verbindungseinrichtungen (10) zur Verstellbarkeit entlang des Querträgers (2) ausgeführt sind, wobei der Unterfahrschutz (1) zusätzlich durch folgendes Merkmal gekennzeichnet ist:
a) dass die jeweilige Verbindungseinrichtung (10) eine Vorderseite (Ev) und eine Hinterseite (Eh) aufweist und eine Längserstreckung der Hinterseite (Eh) kleiner ist als eine Längserstreckung der Vorderseite (Ev).

2. Unterfahrschutz (1) nach Anspruch 1, **dadurch gekennzeichnet, dass** die Tragarme (3) relativ zum Fahrzeug (K) nach hinten ausgestellt sind.

3. Unterfahrschutz (1) nach Anspruch 1 oder 2, **dadurch gekennzeichnet, dass** die Tragarme (3) sich von der Montagekonstruktion (M) nach unten erstrecken.

4. Unterfahrschutz (1) nach einem der vorhergehenden Ansprüche, **dadurch gekennzeichnet, dass** die Tragarme (3) sich zwischen dem Querträger (2) und der Montageeinrichtung (M) schräg erstrecken.

5. Unterfahrschutz (1) nach einem der vorhergehenden Ansprüche, **dadurch gekennzeichnet, dass** die jeweilige Verbindungseinrichtung (10) sich nach hinten verjüngt und/oder an ihrer Hinterseite (Eh) schmaler ist als an ihrer Vorderseite (Ev).

6. Unterfahrschutz (1) nach einem der vorhergehenden Ansprüche, **dadurch gekennzeichnet, dass** die Innenform der Verbindungseinrichtungen (10) an die Außenform des Querträgers (2) angepasst ist, so dass ein Aufnahmeraum zur abschnittsweisen Aufnahme des Querträgers (2) gebildet wird.

7. Unterfahrschutz (1) nach einem der vorhergehenden Ansprüche, **dadurch gekennzeichnet, dass** die jeweilige Verbindungseinrichtung (10) den Querträger (2) in seiner Umfangsrichtung über zumindest 180° oder im Wesentlichen vollständig einmantelt.

8. Unterfahrschutz (1) nach einem der vorhergehenden Ansprüche, **dadurch gekennzeichnet, dass** die jeweilige Verbindungseinrichtung (10) eines von folgenden umfassen:
a) ein Hohlprofil
b) zwei Schalenteile
c) ein C- oder U-Profil.

9. Unterfahrschutz (1) nach einem der vorhergehenden Ansprüche, **dadurch gekennzeichnet, dass** die Verbindungseinrichtungen (10) zur lösbaren Montage an den Querträger (2) ausgeführt sind.

10. Unterfahrschutz (1) nach einem der vorhergehenden Ansprüche, **dadurch gekennzeichnet, dass** die jeweilige Verbindungseinrichtung (10) einstückig oder mehrstückig ausgeführt ist.

11. Fahrzeug (K), vorzugsweise Kraftfahrzeug (K), insbesondere Nutzfahrzeug, und/oder Anhänger hierfür, mit einem Unterfahrschutz (1) nach einem der vorhergehenden Ansprüche.

## Claims

1. An underrun protection system (1) for arrangement on a rear end of a vehicle (K), having a crossmember (2) and two support arms (3) for supporting the crossmember (2) and for mounting on a mounting structure (M) of the vehicle (K), wherein the two support arms (3) are set laterally outwards such that the spacing of the support arms (3) at the crossmember (2) is larger than the spacing of the support arms (3) at the mounting structure (M), wherein the underrun protection system (1) comprises two connecting devices (10) for mounting the crossmember (2) on the support arms (3), **characterized in that** the connecting devices (10) serve as reinforcement parts for sectional reinforcement of the crossmember (2), and/or the connecting devices (10) are designed for adjustability along the crossmember (2), wherein the underrun protection system (1) is additionally **characterized by** the following feature:
a) the respective connecting device (10) has a front side (Ev) and a rear side (Eh), and a longitudinal extent of the rear side (Eh) is smaller than a longitudinal extent of the front side (Ev).

2. The underrun protection system (1) according to Claim 1, **characterized in that** the support arms (3) are set rearwards relative to the vehicle (K).

3. The underrun protection system (1) according to Claim 1 or 2, **characterized in that** the support arms (3) extend downwards from the mounting structure (M) .

4. The underrun protection system (1) according to one of the preceding claims, **characterized in that** the support arms (3) extend obliquely between the crossmember (2) and the mounting device (M).

5. The underrun protection system (1) according to one of the preceding claims, **characterized in that** the respective connecting device (10) narrows to the rear and/or is narrower at its rear side (Eh) than at its front side (Ev).

6. The underrun protection system (1) according to one of the preceding claims, **characterized in that** the internal shape of the connecting devices (10) is matched to the external shape of the crossmember (2) such that a receiving space for sectionally receiving the crossmember (2) is formed.

7. The underrun protection system (1) according to one of the preceding claims, **characterized in that** the respective connecting device (10) encases the crossmember (2) in the peripheral direction of the latter over at least 180° or substantially entirely.

8. The underrun protection system (1) according to one of the preceding claims, **characterized in that** the respective connecting device (10) comprises one of the following:
a) a hollow profile
b) two shell parts
c) a C-shaped or U-shaped profile.

9. The underrun protection system (1) according to one of the preceding claims, **characterized in that** the connecting devices (10) are designed for releasable mounting on the crossmember (2).

10. The underrun protection system (1) according to one of the preceding claims, **characterized in that** the respective connecting device (10) is of single-part or multi-part form.

11. A vehicle (K), preferably a motor vehicle (K), in particular a utility vehicle, and/or a trailer therefor, having an underrun protection system (1) according to one of the preceding claims.

## Revendications

1. Protection contre l'encastrement (1) devant être disposée au niveau d'une partie arrière d'un véhicule (K), comprenant une traverse (2) et deux bras de support (3) pour supporter la traverse (2) et pour le montage sur une construction de montage (M) du véhicule (K), les deux bras de support (3) étant écartés latéralement vers l'extérieur de telle sorte que la distance entre les bras de support (3) au niveau de la traverse (2) soit supérieure à la distance entre les bras de support (3) au niveau de la construction de montage (M), la protection contre l'encastrement (1) comprenant deux dispositifs de liaison (10) pour le montage de la traverse (2) sur les bras de support (3), **caractérisée en ce que** les dispositifs de liaison (10) servent de pièces de renforcement pour le renforcement de parties de la traverse (2) et/ou les dispositifs de liaison (10) sont réalisés de manière à pouvoir être déplacés le long de la traverse (2), la protection contre l'encastrement (1) étant en outre **caractérisée par** la caractéristique suivante :
a) le dispositif de liaison respectif (10) présente un côté avant (Ev) et un côté arrière (Eh) et une étendue longitudinale du côté arrière (Eh) est inférieure à une étendue longitudinale du côté avant (Ev).

2. Protection contre l'encastrement (1) selon la revendication 1, **caractérisée en ce que** les bras de support (3) sont écartés vers l'arrière par rapport au véhicule (K).

3. Protection contre l'encastrement (1) selon la revendication 1 ou 2, **caractérisée en ce que** les bras de support (3) s'étendent vers le bas depuis la construction de montage (M).

4. Protection contre l'encastrement (1) selon l'une quelconque des revendications précédentes, **caractérisée en ce que** les bras de support (3) s'étendent obliquement entre la traverse (2) et le dispositif de montage (M).

5. Protection contre l'encastrement (1) selon l'une quelconque des revendications précédentes, **caractérisée en ce que** le dispositif de liaison respectif (10) se rétrécit vers l'arrière et/ou est plus étroit au niveau de son côté arrière (Eh) qu'au niveau de son côté avant (Ev).

6. Protection contre l'encastrement (1) selon l'une quelconque des revendications précédentes, **caractérisée en ce que** la forme intérieure des dispositifs de liaison (10) est adaptée à la forme extérieure de la traverse (2) de telle sorte qu'un espace de réception soit formé pour recevoir en partie la traverse (2).

7. Protection contre l'encastrement (1) selon l'une quelconque des revendications précédentes, **caractérisée en ce que** le dispositif de liaison respectif (10) enveloppe la traverse (2) dans sa direction périphérique sur au moins 180° ou essentiellement complètement.

8. Protection contre l'encastrement (1) selon l'une quelconque des revendications précédentes, **caractérisée en ce que** le dispositif de liaison respectif (10) comprend l'un des éléments suivants :
a) un profilé creux
b) deux parties de coque
c) un profilé en C ou en U.

9. Protection contre l'encastrement (1) selon l'une quelconque des revendications précédentes, **caractérisée en ce que** les dispositifs de liaison (10) sont réalisés pour un montage amovible sur la traverse (2).

10. Protection contre l'encastrement (1) selon l'une quelconque des revendications précédentes, **caractérisée en ce que** le dispositif de liaison respectif (10) est réalisé d'une seule pièce ou en plusieurs parties.

11. Véhicule (K), de préférence véhicule automobile (K), en particulier véhicule utilitaire et/ou remorque pour celui-ci, comprenant une protection contre l'encastrement (1) selon l'une quelconque des revendications précédentes.
